(19) Europäisches Patentamt / European Patent Office / Office européen des brevets

(11) **EP 4 756 919 A1**

(12) **EUROPEAN PATENT APPLICATION**
published in accordance with Art. 153(4) EPC

(43) Date of publication:
**10.06.2026  Bulletin 2026/24**

(21) Application number: **24848727.4**

(22) Date of filing: **24.06.2024**

(51) International Patent Classification (IPC):
**H01M 4/525** (2010.01)  **C01G 53/00** (2025.01)
**H01M 4/505** (2010.01)

(52) Cooperative Patent Classification (CPC):
**C01G 53/00; H01M 4/505; H01M 4/525;**
**Y02E 60/10**

(86) International application number:
**PCT/JP2024/022715**

(87) International publication number:
**WO 2025/028066 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023  JP 2023124269**

(71) Applicant: **Panasonic Intellectual Property Management Co., Ltd.**
**Kadoma-shi, Osaka 571-0057 (JP)**

(72) Inventors:
• **ESAKI, Shogo**
  **Kadoma-shi, Osaka 571-0057 (JP)**
• **KAWADA, Hiroshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL, POSITIVE ELECTRODE, NONAQUEOUS ELECTROLYTE SECONDARY BATTERY, AND METHOD FOR PRODUCING POSITIVE ELECTRODE ACTIVE MATERIAL**

(57) Disclosed is a positive electrode active material which is used in a nonaqueous electrolyte secondary battery (10), and which is characterized by having a crystal structure belonging to the space group R-3m, and being represented by composition formula $Li_xNa_yNi_{1-a-b}Mn_aX_bO_c$. In the formula, X represents at least one element that is selected from the group consisting of transition metal elements other than Li, Na, Ni, and Mn and typical elements, $0.80 \leq x \leq 1.15$, $0 < y \leq 0.20$, $0.80 < x + y \leq 1.20$, $0 < 1 - a - b \leq 1$, $0 \leq a < 1$, $0 \leq b < 1$, and c is a value that satisfies electrical neutrality. The positive electrode active material is also characterized in that, in the dQ/dV curve that is obtained when the nonaqueous electrolyte secondary battery (10) is initially charged, the voltage has a peak within the range of 4.2 V to 4.4 V inclusive, and the half-value width of the peak is 0.11 V or less.

Figure 3

**Description**

TECHNICAL FIELD

The present disclosure relates to a positive electrode active material, a positive electrode, a non-aqueous electrolyte secondary battery, and a method for producing a positive electrode active material.

BACKGROUND ART

In non-aqueous electrolyte secondary batteries such as lithium-ion secondary batteries, many studies have been made on a positive electrode active material since the positive electrode active material has a significant influence on battery performance such as input/output characteristics, capacity, and durability. For the positive electrode active material, a lithium-transition metal composite oxide containing a transition metal element such as Ni or Mn is generally used. The type and addition amount of elements contained in the lithium-transition metal composite oxide, the crystal structure of the composite oxide, and the like significantly affect the battery performance, and even a slight change in these physical properties may fail to achieve the desired performance. For example, Patent Literatures 1 to 6 disclose that the crystal structure of a positive electrode active material having a specific composition is modified for the purpose of improving battery performance such as an increase in capacity.

CITATION LIST

PATENT LITERATURE

PATENT LITERATURE 1: Japanese Unexamined Patent Application Publication No. 2018-107118
PATENT LITERATURE 2: Japanese Patent No. 6410737
PATENT LITERATURE 3: Japanese Patent No. 5750814
PATENT LITERATURE 4: Japanese Unexamined Patent Application Publication No. 2014-029829
PATENT LITERATURE 5: Japanese Unexamined Patent Application Publication No. 2013-020715
PATENT LITERATURE 6: Japanese Unexamined Patent Application Publication No. 2007-042295

SUMMARY

In recent years, applications of non-aqueous electrolyte secondary batteries, such as lithium-ion secondary batteries, have expanded to power sources for electric vehicles. In these applications, improvement of load characteristics is required in order to shorten charging time. In addition, these applications require further increases in capacity as well as improvements in charge-discharge cycle characteristics. The positive electrode active materials in Patent Literatures 1 to 6 do not take into consideration the simultaneous achievement of increased capacity together with excellent charge-discharge cycle characteristics and load characteristics, and therefore there still remains room for improvement.

A positive electrode active material according to an aspect of the present disclosure is a positive electrode active material for use in a non-aqueous electrolyte secondary battery, in which the positive electrode active material has a crystal structure belonging to a space group R-3m, and is represented by a compositional formula $Li_xNa_yNi_{1-a-b}Mn_aX_bO_c$, wherein X represents at least one selected from the group consisting of transition metal elements and main-group elements other than Li, Na, Ni, and Mn; $0.80 \leq x \leq 1.15$, $0 < y \leq 0.20$, $0.80 < x+y \leq 1.20$, $0 < 1-a-b \leq 1$, $0 \leq a < 1$, and $0 \leq b < 1$ are satisfied; and c is a value satisfying electroneutrality, and a dQ/dV curve obtained upon initial charge of the non-aqueous electrolyte secondary battery exhibits a peak in a voltage range of greater than or equal to 4.2 V and less than or equal to 4.4 V with a half-width of the peak being less than or equal to 0.11 V.

A method for producing a positive electrode active material according to an aspect of the present disclosure is a method for producing a positive electrode active material for use in a non-aqueous electrolyte secondary battery, the method including the steps of: synthesizing a Na composite oxide represented by a compositional formula $Na_eNi_{1-f-g}Mn_fX_gO_h$, wherein X represents at least one element selected from the group consisting of metal elements other than Li, Na, Ni, and Mn, $e \leq 1.15$, $0 < 1-f-g \leq 1$, $0 \leq f < 1$, and $0 \leq g < 1$ are satisfied, and h is a value satisfying electroneutrality; and reacting the Na composite oxide with a lithium compound to replace a part of Na in the Na composite oxide with Li, in which the lithium compound includes at least one selected from the group consisting of lithium hydroxide, lithium carbonate, and lithium hydrogen carbonate.

A positive electrode according to an aspect of the present disclosure includes the positive electrode active material.

A non-aqueous electrolyte secondary battery according to an aspect of the present disclosure comprises the positive electrode, a negative electrode, and a non-aqueous electrolyte.

According to the positive electrode active material of the present disclosure, improvements in battery capacity, charge-discharge cycle characteristics, and load characteristics of a non-aqueous electrolyte secondary battery can be achieved.

BRIEF DESCRIPTION OF DRAWING

FIG. 1 is an axial sectional view of a non-aqueous electrolyte secondary battery of an example of an embodiment.
FIG. 2 is a view illustrating initial charge-discharge curves of non-aqueous electrolyte secondary batteries using the positive electrode active materials produced in Examples and Comparative Examples.
FIG. 3 is a view illustrating dQ/dV curves of non-aqueous electrolyte secondary batteries using the positive electrode active materials produced in Examples and Comparative Examples.

DESCRIPTION OF EMBODIMENTS

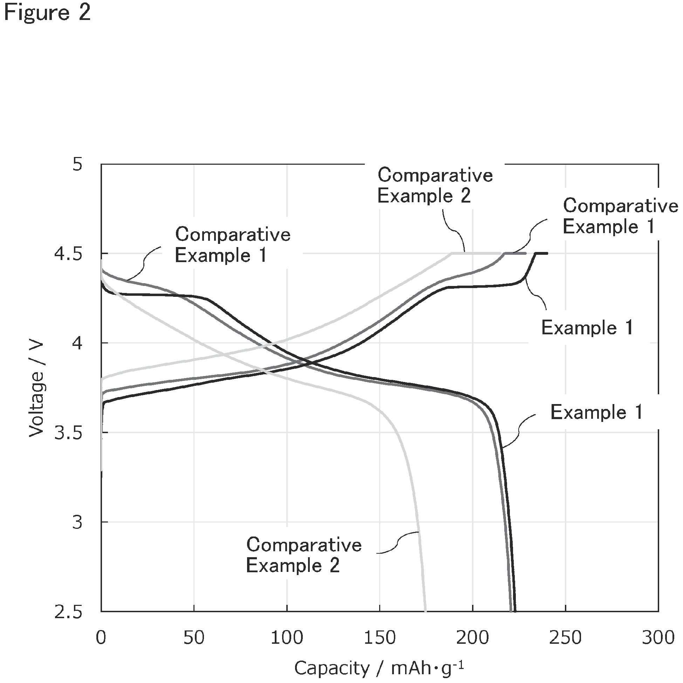

As a result of the studies, the present inventors have found that, in a non-aqueous electrolyte secondary battery including, in a positive electrode, a positive electrode active material having a crystal structure belonging to a space group R-3m, and being represented by a compositional formula $Li_xNa_yNi_{1-a-b}Mn_aX_bO_c$, wherein X represents at least one selected from the group consisting of transition metal elements and main-group elements other than Li, Na, Ni, and Mn; $0.80 \leq x \leq 1.15$, $0 < y \leq 0.20$, $0.80 < x+y \leq 1.20$, $0 < 1-a-b \leq 1$, $0 \leq a < 1$, and $0 \leq b < 1$ are satisfied; and c is a value satisfying electroneutrality, there is a relationship between the peak of a dQ/dV curve obtained during the initial charge and the battery capacity. More specifically, the present inventors have found that an increase in battery capacity can be achieved when a dQ/dV curve obtained upon initial charge of the non-aqueous electrolyte secondary battery exhibits a peak in a voltage range of greater than or equal to 4.2 V and less than or equal to 4.4 V. This is because when the dQ/dV curve exhibits a peak in the voltage range of greater than or equal to 4.2 V and less than or equal to 4.4 V, as illustrated in FIG. 2 of an embodiment described below, a plateau region appears in the initial charge-discharge curve, where the voltage remains nearly constant despite a certain variation in capacity. As used herein, the term "dQ/dV curve" refers to a graph showing the voltage of a non-aqueous electrolyte secondary battery during initial charge on the horizontal axis and a value of dQ/dV, which is the differential of the battery capacity with respect to voltage, on the vertical axis.

Although the detailed mechanism is not clear, it has been found that an increase in battery capacity can be achieved together with excellent charge-discharge cycle characteristics and load characteristics by controlling the half-width of a peak appearing in the voltage range of greater than or equal to 4.2 V and less than or equal to 4.4 V to less than or equal to 0.11 V in the dQ/dV curve. That is, even when the dQ/dV curve of a non-aqueous electrolyte secondary battery using a positive electrode active material represented by the above compositional formula exhibits a peak in the voltage range of greater than or equal to 4.2 V and less than or equal to 4.4 V, the charge-discharge cycle characteristics and load characteristics cannot be improved if the half-width of the peak exceeds 0.11 V. In addition, even when the half-width of the peak is less than or equal to 0.11 V, an increase in capacity together with excellent charge-discharge cycle characteristics and load characteristics cannot be achieved if the composition deviates from the above compositional formula, for example in a case where the positive electrode active material does not contain Na.

Hereinafter, an example of embodiments of the positive electrode active material according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

Hereinafter, as a non-aqueous electrolyte secondary battery, a cylindrical battery in which a wound electrode assembly 14 is housed in a bottomed cylindrical exterior body 16 will be exemplified, but the exterior body of the battery is not limited to the cylindrical exterior body. The non-aqueous electrolyte secondary battery according to the present disclosure may be, for example, a rectangular battery comprising a rectangular exterior body; a coin battery comprising a coin-shaped exterior body; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator. Further, the design of the non-aqueous electrolyte secondary battery according to the present disclosure is not limited to the design of the illustrated non-aqueous electrolyte secondary battery, and a known non-aqueous electrolyte secondary battery design may also be applied.

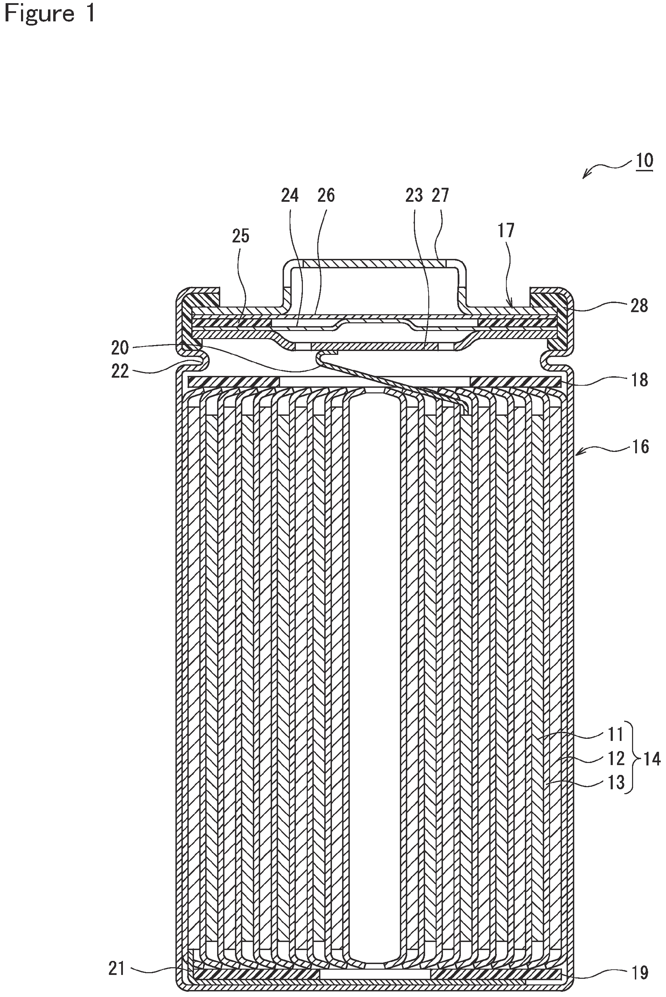

FIG. 1 is an axial sectional view of a cylindrical non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior body 16 housing the electrode assembly 14 and the non-aqueous electrolyte. The electrode assembly 14 includes a positive electrode 11, a negative electrode 12, and a separator 13, and has a wound structure in which the positive electrode 11 and the negative electrode 12 are spirally wound via the separator 13. The exterior body 16 is a bottomed cylindrical metallic container having an opening portion on one side in an axial direction, and the opening portion of the exterior body 16 is sealed with a sealing assembly 17. Hereinafter, for convenience of description, the sealing assembly 17 side of the battery will be described as the upper side, and the bottom side of the exterior body 16 will be described as the lower side.

The positive electrode 11, the negative electrode 12, and the separator 13, which constitute the electrode assembly 14, are each an elongated rectangular body, and spirally wound in a longitudinal direction to be alternately stacked in a radial direction of the electrode assembly 14. The separator 13 serves to keep the positive electrode 11 and the negative electrode 12 apart. For example, two separators 13 are disposed so as to sandwich the positive electrode 11. The electrode assembly 14 comprises a positive electrode lead 20 connected to the positive electrode 11 by welding or the like and a negative electrode lead 21 connected to the negative electrode 12 by welding or the like. In the electrode assembly 14, the longitudinal directions of the positive electrode 11 and the negative electrode 12 correspond to the winding direction, while the transverse directions of the positive electrode 11 and the negative electrode 12 correspond to the axial direction. That is, the end faces in the transverse directions of the positive electrode 11 and the negative electrode 12 form the end faces in the axial direction of the electrode assembly 14.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior body 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior body 16 by welding or the like, and the exterior body 16 becomes a negative electrode terminal.

A gasket 28 is provided between the exterior body 16 and the sealing assembly 17 to achieve sealability inside the battery. On the exterior body 16, a grooved portion 22 in which a part of a side surface portion thereof projects inward to support the sealing assembly 17 is formed. The grooved portion 22 is preferably formed in a circular shape along a circumferential direction of the exterior body 16, and supports the sealing assembly 17 with the upper face thereof. The sealing assembly 17 is fixed on the upper part of the exterior body 16 with the grooved portion 22 and with an end part of the opening portion of the exterior body 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, the separator 13, and the non-aqueous electrolyte, which constitute the non-aqueous electrolyte secondary battery 10, specifically the positive electrode 11, will be described in detail.

[Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used.

The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is not particularly limited, but is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is not particularly limited, but is greater than or equal to 0.1 mass% and less than or equal to 5 mass% relative to the mass of the positive electrode mixture layer, for example.

The positive electrode active material is a lithium-sodium transition metal composite oxide (hereinafter referred to as a "Li-Na composite oxide") including a crystal structure belonging to the space group R-3m, and being represented by the compositional formula $Li_xNa_yNi_{1-a-b}Mn_aX_bO_c$. In the compositional formula, X represents at least one selected from the group consisting of transition metal elements and main-group elements other than Li, Na, Ni, and Mn; $0.80 \leq x \leq 1.15$, $0 < y \leq 0.20$, $0.80 < x+y \leq 1.20$, $0 < 1-a-b \leq 1$, $0 \leq a < 1$, and $0 \leq b < 1$ are satisfied; and c is a value satisfying electroneutrality. The composite oxide constituting the positive electrode active material contains Li, Na, and Ni as essential elements and preferably further contains Mn. The contents of Li, Na, Ni, Mn, and X contained in the positive electrode active material can be measured using an ICP optical emission spectrometer (for example, CIROS-120, manufactured by SPECTRO).

In the compositional formula $Li_xNa_yNi_{1-a-b}Mn_aX_bO_c$, a mole ratio (y) of Na may be greater than 0 and less than or equal to 0.2 ($0 < y \leq 0.2$), and is preferably greater than or equal to 0.02, more preferably greater than or equal to 0.05, and still more preferably greater than or equal to 0.08. When the mole ratio (y) of Na satisfies $0.02 \leq y \leq 0.2$, $0.05 \leq y \leq 0.2$, or $0.08 \leq y \leq 0.2$, the half-width of the peak appearing in the voltage range of greater than or equal to 4.2 V and less than or equal to 4.4 V in the dQ/dV curve obtained upon initial charge becomes smaller. As a result, an increase in capacity can be readily achieved while simultaneously realizing excellent charge-discharge cycle characteristics and load characteristics.

In the compositional formula $Li_xNa_yNi_{1-a-b}Mn_aX_bO_c$, the mole ratio (y) of Na is preferably less than or equal to 0.15, more preferably less than or equal to 0.14, and still more preferably less than or equal to 0.13. It is considered that, when the mole ratio (y) of Na is $0 < y \leq 0.15$, $0 < y \leq 0.14$, or $0 < y \leq 0.13$, the layered structure of the composite oxide is stable, and the effect of improving the charge-discharge capacity and initial charge-discharge efficiency becomes more remarkable. When the mole ratio (y) of Na exceeds 0.2, Na ions may be extracted from the positive electrode during charge, and the extracted Na ions may be occluded in the negative electrode. As a result, a reaction with the non-aqueous electrolyte may occur during charge and discharge to generate a byproduct, resulting in a decrease in charge-discharge capacity and charge-discharge efficiency of the battery. Thus, an example of a preferable range of the mole ratio (y) of Na satisfies $0.02 \leq y \leq 0.15$, $0.05 \leq y \leq 0.14$, or $0.06 \leq y \leq 0.13$.

In the compositional formula $Li_xNa_yNi_{1-a-b}Mn_aX_bO_c$, the mole ratio (x) of Li may be greater than or equal to 0.80 and less than or equal to 1.15 ($0.80 \leq x \leq 1.15$), and is preferably more than or equal to 0.82, more preferably more than or equal to 0.84. The upper limit of the mole ratio (x) of Li is preferably 1.00, more preferably 0.95. An example of a preferable range of the mole ratio (x) of Li satisfies $0.80 \leq x \leq 1.00$, $0.80 \leq x \leq 0.95$, $0.82 \leq x \leq 1.15$, $0.82 \leq x \leq 1.00$, $0.82 \leq x \leq 0.95$, $0.84 \leq x \leq 1.15$, $0.84 \leq x \leq 1.00$, or $0.84 \leq x \leq 0.95$. When the mole ratio (x) of Li is within the range, the effect of improving the charge-discharge capacity and initial charge-discharge efficiency becomes more remarkable.

In the compositional formula $Li_xNa_yNi_{1-a-b}Mn_aX_bO_c$, the total mole ratio (x+y) of Li and Na may be greater than 0.80 and less than or equal to 1.20 ($0.80 < x+y \leq 1.20$), and is preferably greater than or equal to 0.85, more preferably greater than or equal to 0.90, and still more preferably greater than or equal to 0.95. The upper limit of the total mole ratio (x+y) of Li and Na is preferably 1.10, more preferably 1.05. An example of a preferable range of the total mole ratio (x+y) of Li and Na satisfies $0.80 < x+y \leq 1.10$, $0.80 < x+y \leq 1.05$, $0.85 \leq x+y \leq 1.20$, $0.85 \leq x+y \leq 1.10$, $0.85 \leq x+y \leq 1.05$, $0.90 \leq x+y \leq 1.20$, $0.90 \leq x+y \leq 1.10$, $0.90 \leq x+y \leq 1.05$, $0.95 \leq x+y \leq 1.20$, $0.95 \leq x+y \leq 1.10$, or $0.95 \leq x+y \leq 1.05$. When the total mole ratio (x+y) of Li and Na is within the range, the effect of improving the charge-discharge capacity and initial charge-discharge efficiency becomes more remarkable.

In the compositional formula $Li_xNa_yNi_{1-a-b}Mn_aX_bO_c$, the mole ratio (1-a-b) of Ni may be less than or equal to 1 ($0 < 1-a-b \leq 1$), and is preferably less than or equal to 0.82, more preferably less than or equal to 0.70. The mole ratio (1-a-b) of Ni is preferably greater than or equal to 0.30, and more preferably greater than or equal to 0.40. Thus, an example of a preferable range of the mole ratio (1-a-b) of Ni is $0.30 \leq 1-a-b \leq 0.82$, or $0.40 \leq 1-a-b \leq 0.70$. In this case, the effect of improving the charge-discharge capacity and initial charge-discharge efficiency becomes more remarkable.

The positive electrode active material preferably contains Mn as described above. In the compositional formula $Li_xNa_yNi_{1-a-b}Mn_aX_bO_c$, the mole ratio (a) of Mn is preferably less than or equal to 0.75, and more preferably less than or equal to 0.65. In addition, the mole ratio (a) of Mn is preferably greater than or equal to 0.20, and more preferably greater than or equal to 0.25. An example of a preferable range of the mole ratio (a) of Mn satisfies $0.20 \leq a \leq 0.75$ or $0.25 \leq a \leq 0.65$. In this case, the effect of improving the charge-discharge capacity and initial charge-discharge efficiency becomes more remarkable.

In the compositional formula $Li_xNa_yNi_{1-a-b}Mn_aX_bO_c$, X may represent at least one element selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al. When X is added in an appropriate amount, the effect of improving the charge-discharge capacity and initial charge-discharge efficiency becomes more remarkable. The mole ratio (b) of X is preferably less than or equal to 0.10 ($0 \leq b \leq 0.10$), more preferably less than or equal to 0.08 ($0 \leq b \leq 0.08$), and still more preferably less than or equal to 0.05 ($0 \leq b \leq 0.05$).

In the compositional formula $Li_xNa_yNi_{1-a-b}Mn_aX_bO_c$, X preferably represents at least one selected from the group consisting of Al, Co, and Zr, among which Al or Co is preferable. For example, when Al is contained in the positive electrode active material, an example of a preferable range of the mole ratio (b) of Al satisfies $0.005 \leq b \leq 0.025$. For example, when Co is contained in the positive electrode active material, an example of a preferable range of the mole ratio (b) of Co satisfies $0.005 \leq b \leq 0.1$.

In the compositional formula $Li_xNa_yNi_{1-a-b}Mn_aX_bO_c$, the mole ratio (c) of O is a value satisfying electroneutrality. In other words, the mole ratio (c) of O is a value satisfying the valence of O in the positive electrode active material. The mole ratio (c) of O is not particularly limited as long as it satisfies the valence in the positive electrode active material, and may satisfy, for example, $c = x + y + 1$, $c < x + y + 1$, or $c > x + y + 1$. In particular, in the positive electrode active material immediately after production, when $c < x + y + 1$, the structure is a layered rock-salt structure deficient in oxygen. In addition, in the positive electrode active material immediately after production, when $c > x + y + 1$, the structure is a layered rock-salt structure excess in oxygen. In the structure deficient in oxygen, the electronic conductivity of the positive electrode active material is improved by oxygen deficiency, but when the oxygen deficiency increases, the crystal structure belonging to the space group R-3m can no longer be maintained, which is considered to cause a decrease in charge-discharge capacity and cycle characteristics. In addition, in the structure with excess oxygen, the presence of oxygen between lattices improves the electronic conductivity of the positive electrode active material, but if the amount of excess oxygen increases, the valence of Ni and Mn in the positive electrode active material increases, which is considered to cause a significant decrease in charge capacity. Accordingly, for example, when the total mole ratio of Ni, Mn, and X is taken as 1, the mole ratio (c) of O is preferably greater than or equal to 1.8 and less than or equal to 2.3, and more preferably greater than or equal to 1.85 and less than or equal to 2.25. Note that the oxygen content in the positive electrode active material may be measured using an oxygen-nitrogen analyzer (for example, EMGA-920 manufactured by HORIBA, Ltd.).

The Li-Na composite oxide is formed of, for example, secondary particles each formed by aggregation of a plurality of primary particles. The Li-Na composite oxide has a volume-based median diameter (D50) of greater than or equal to 1 μm and less than or equal to 30 μm, or greater than or equal to 3 μm and less than or equal to 20 μm, for example. The D50 of the composite oxide is a particle diameter at which the volume integrated value is 50% in particle size distribution measured by a laser diffraction scattering method. A BET specific surface area of the Li-Na composite oxide is, for example, greater than or equal to 0.1 m$^2$/g and less than or equal to 10 m$^2$/g, or greater than or equal to 0.5 m$^2$/g and less than or equal to 5 m$^2$/g. The BET specific surface area of the composite oxide is measured according to a BET method (nitrogen adsorption method) described in JIS R1626. When the D50 and the BET specific surface area are within the range, the capacity can be easily increased.

The positive electrode active material contains the Li-Na composite oxide as a main component. Here the main component means a component having the highest mass ratio among constituent components of the positive electrode active material. In a mixture layer of the positive electrode 11, a composite oxide other than the Li-Na composite oxide may be used in combination as the positive electrode active material, and the content of the Li-Na composite oxide is preferably greater than or equal to 50 mass%, and may be substantially 100 mass%.

In the non-aqueous electrolyte secondary battery using the Li-Na composite oxide as a positive electrode active material, the dQ/dV curve obtained upon initial charge exhibits a peak in a voltage range of greater than or equal to 4.2 V and less than or equal to 4.4 V with a half-width of the peak being less than or equal to 0.11 V. As used herein, the expression "upon initial charge of the non-aqueous electrolyte secondary battery" refers to a case where a non-aqueous electrolyte secondary battery composed of a positive electrode including a positive electrode active material composed of the Li-Na composite oxide, a negative electrode composed of lithium metal foil, and a non-aqueous electrolyte, is initially charged, and the specific conditions are as described in Examples described below.

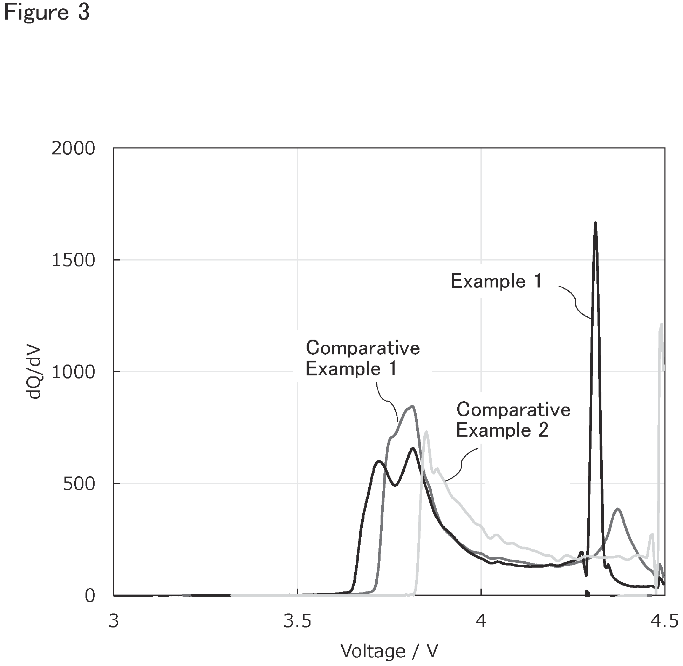

FIGS. 2 and 3 illustrate, respectively, the initial charge-discharge curve of the non-aqueous electrolyte secondary battery using, as a positive electrode active material, the Li-Na composite oxide of the present embodiment, and the dQ/dV curve obtained upon the initial charge. FIGS. 2 and 3 illustrate initial charge-discharge curves and dQ/dV curves, respectively, of non-aqueous electrolyte secondary batteries using, as positive electrode active materials, the composite oxides synthesized in Example 1, Comparative Example 1, and Comparative Example 2 described below. As will be described in detail later, the composite oxide of Example 1 is represented by the compositional formula $Li_{0.851}Na_{0.123}Ni_{0.505}Mn_{0.495}O_{1.804}$, and the composite oxides of Comparative Examples 1 and 2 are represented by compositional formulas $Li_{0.938}Na_{0.0229}Ni_{0.505}Mn_{0.495}O_{1.935}$ and $Li_{1.00}Ni_{0.500}Mn_{0.500}O_{2.000}$, respectively.

As illustrated in FIG. 3, the dQ/dV curve of the non-aqueous electrolyte secondary battery of Example 1 exhibits a convex-shaped peak in the vicinity of 4.31 V. As illustrated in FIG. 2, the initial charge-discharge curve of the non-aqueous electrolyte secondary battery of Example 1 exhibits a plateau region in the vicinity of 4.316 V, where the voltage remains nearly constant despite a certain variation in capacity. As a result of the studies, the present inventors have found that an increase in battery capacity can be achieved when the length of the plateau region in the charge-discharge curve extends by using the positive electrode active material containing a predetermined amount of Na and allowing the dQ/dV curve to exhibit the peak. Although the detailed mechanism is not clear, it is presumed that, when a positive electrode active material containing a predetermined amount of Na is used and the dQ/dV curve exhibits the peak, charge and discharge are likely to proceed through a so-called two-phase coexistence reaction in which a composite oxide of two crystal phases having different Li contents undergoes charge and discharge while changing the relative proportions thereof, whereby the length of the plateau region becomes longer.

The half-width of the peak in the range of greater than or equal to 4.2 V and less than or equal to 4.4 V may be less than or equal to 0.11 V, and is preferably less than or equal to 0.08 V, more preferably less than or equal to 0.06 V, and still more preferably less than or equal to 0.04 V. When the half-width is less than or equal to 0.08 V, less than or equal to 0.06 V, or less than or equal to 0.04 V, the effect of improving the charge-discharge cycle characteristics and load characteristics becomes more remarkable. The lower limit of the half-width of the peak in the range of greater than or equal to 4.2 V and less than or equal to 4.4 V is not particularly limited, but is preferably greater than or equal to 0.001 V, and more preferably 0.005 V. In this case, the effect of improving the charge-discharge cycle characteristics and load characteristics becomes more remarkable.

In the dQ/dV curve, the intensity of the peak appearing in the range of greater than or equal to 4.2 V and less than or equal to 4.4 V is preferably greater than the intensity of peaks appearing in other ranges. In particular, in consideration of the balance among an increase in capacity, excellent charge-discharge cycle characteristics, and excellent load characteristics, the intensity of the peak appearing in the range of greater than or equal to 4.2 V and less than or equal to 4.4 V is more preferably the maximum within a charge-discharge voltage range of greater than or equal to 3 V and less than or equal to 4.5 V. For example, in the non-aqueous electrolyte secondary battery of Example 1, as illustrated in FIG. 3, a peak (first peak) appears in the vicinity of 4.3 V, a peak (second peak) appears in the vicinity of 3.8 V, and a peak (third peak) appears in the vicinity of 3.7 V. Here, when the intensity of the first peak is defined as $I_1$, the intensity of the second peak as $I_2$, and the intensity of the third peak as $I_3$, it is preferable that $I_1 > I_2$ and $I_1 > I_3$ are satisfied. In this case, the effect of improving the charge-discharge cycle characteristics and load characteristics becomes more remarkable.

The positive electrode active material of an example of an embodiment can be produced by the following method. Note that the production method described here is merely an example, and the method for producing the positive electrode active material is not limited thereto.

A Li-Na composite oxide is produced through (1) a step of mixing and calcinating a Na raw material and a nickel raw material to synthesize a Na composite oxide and (2) a step of reacting the Na composite oxide with a lithium compound to replace a part of Na in the Na composite oxide with Li. In step (1), a manganese raw material is preferably further added, a raw material containing an element X may be added, thereby synthesizing a Na composite oxide represented by the compositional formula $Na_eNi_{1-f-g}Mn_fX_gO_h$, wherein X represents at least one element selected from the group consisting of metal elements other than Li, Na, Ni, and Mn; $e \leq 1.15$, $0 < 1\text{-}f\text{-}g \leq 1$, $0 \leq f < 1$, and $0 \leq g < 1$; h is a value satisfying electroneutrality.

At least one selected from the group consisting of metallic sodium and a sodium compound is used as the sodium raw material. The sodium compound is not particularly limited as long as it contains Na, and examples thereof include an acetate such as $CH_3COONa$ and $CH_3COONa \cdot 3H_2O$, a nitrate such as $NaNO_3$, a sulfate such as $Na_2SO_4$, a carbonate such as $Na_2CO_3$, a bicarbonate such as $NaHCO_3$, a hydroxide such as $NaOH$, and an oxide such as $Na_2O$ and $Na_2O_2$. Among these, $Na_2CO_3$, $NaHCO_3$, $NaOH$, and $NaNO_3$ are preferable.

At least one selected from the group consisting of metallic nickel and a nickel compound is used as the nickel raw material. The nickel compound is not particularly limited as long as it contains Ni, and examples thereof include an oxide such as $NiO$, a hydroxide such as $Ni(OH)_2$ and $NiOOH$, a nitrate such as $NiNO_3$, a carbonate such $NiCO_3$, and $Ni_4CO_3(OH)_6(H_2O)_4$, and a sulfate such as $NiSO_4$. Among these, $Ni(OH)_2$ is preferable.

At least one selected from the group consisting of metallic manganese and a manganese compound is used as the manganese raw material. The manganese compound is not particularly limited as long as it contains Mn, and examples thereof include an oxide such as $MnO$, $Mn_2O_3$, $Mn_3O_4$, and $MnO_2$, a hydroxide such as $Mn(OH)_2$ and $MnOOH$, a carbonate such as $MnCO_3$, a nitrate such as $Mn(NO_3)_2$, and a sulfate such as $MnSO_4$. Among these, $Mn(OH)_2$ is preferable.

At least one selected from the group consisting of an element X and a compound of the element X is used as the raw material containing the element X. The compound containing element X is not particularly limited as long as it contains X, and examples thereof include an oxide, a hydroxide, a carbonate, a nitrate, and a sulfate. Note that a compound containing Ni or Mn, a compound containing Ni or X, a compound containing Mn or X, or a compound containing Ni, Mn, and X may be used as raw materials for the Na composite oxide.

The mixing ratio of the raw materials for the Na composite oxide may be appropriately set without any particular limitation, but for example, in a mixture obtained by mixing the raw materials for the Na composite oxide, the mixing ratio is preferably set so that $0.90 \leq e \leq 1.15$, $0.4 \leq 1\text{-}f\text{-}g \leq 0.82$, $0.25 \leq f \leq 0.65$, and $0.005 \leq g \leq 0.05$ are satisfied, where the mole ratio of Na is defined as e, the mole ratio of Ni is defined as 1-f-g, the mole ratio of Mn is defined as f, and the mole ratio of element X is defined as g. A method of mixing the raw materials is not particularly limited as long as the raw materials are uniformly mixed, for example, mixing using a known mixing machine such as a mixer can be used to mix.

The mixture of the raw materials is calcined in the atmosphere or in an oxygen stream using a calcining furnace. The calcining temperature is preferably greater than or equal to 700°C and less than or equal to 900°C, and more preferably greater than or equal to 750°C and less than or equal to 850°C. The temperature rising rate is preferably slow, for example, greater than or equal to 0.3°C/min and less than or equal to 5.0°C/min, or greater than or equal to 0.5°C/min and less than or equal to 3.0°C/min. The calcining time is preferably greater than or equal to 20 hours when the calcining temperature is greater than or equal to 750°C and less than or equal to 850°C. Herein, the calcining time means the time from when the temperature of the calcining furnace reaches the calcining temperature above until the calcination is completed and cooling starts. The calcined product is rapidly cooled in the atmosphere by being removed from the calcining furnace.

In step (2), a part of Na in the Na composite oxide is replaced with Li. That is, it is necessary to perform Li replacement so that a predetermined amount of Na remains. A preferable method of replacing Na with Li includes a method including adding a molten salt of a lithium compound (hereinafter referred to as a "lithium molten salt") to a Na composite oxide and heating the mixture. For example, at least one selected from the group consisting of lithium hydroxide, lithium carbonate, lithium hydrogen carbonate, lithium nitrate, lithium sulfate, lithium chloride, lithium iodide, and lithium bromide is used as the lithium molten salt, among which at least one selected from the group consisting of lithium hydroxide, lithium carbonate, and lithium hydrogen carbonate is preferably used, and a lithium hydroxide is more preferably used. Note that the lithium hydroxide may be an anhydride or a hydrate. By using at least one selected from the group consisting of lithium hydroxide, lithium carbonate, and lithium hydrogen carbonate as the lithium molten salt, a predetermined amount of Na can be easily left. When lithium hydroxide is used as the lithium molten salt, the mole ratio of lithium hydroxide to the total mole of the lithium molten salt is preferably greater than or equal to 5 mol%, more preferably greater than or equal to 25 mol%, still more preferably greater than or equal to 50 mol%, and still more preferably greater than or equal to 75 mol%. Further, substantially only lithium hydroxide may be used as the lithium molten salt.

In step (2), the mixing ratio of the Na composite oxide and the lithium molten salt can be set as appropriate. When only lithium hydroxide is used as the lithium molten salt, the mixing ratio of the Na composite oxide and the lithium molten salt is set such that the mole ratio (Li/Na) of Li in the lithium molten salt to Na in the Na composite oxide is preferably greater than or equal to 0.9, more preferably greater than or equal to 1.0, and still more preferably greater than or equal to 1.5. The (Li/Na) is preferably less than or equal to 15, more preferably less than or equal to 10, and still more preferably less than or equal to 8. When only lithium hydroxide is used as the lithium molten salt, the Na composite oxide and the lithium molten salt are mixed such that the mixing ratio thereof is set to be the mole ratio (Li/Na) of preferably greater than or equal to 0.9 and less than or equal to 15, more preferably greater than or equal to 1.0 and less than or equal to 10, and still more preferably greater than or equal to 1.5 and less than or equal to 8.

The heating temperature in the Li replacing step is preferably greater than or equal to 200°C and less than or equal to 400°C, and more preferably greater than or equal to 250°C and less than or equal to 350°C. When the heating temperature exceeds 400°C, the reaction may proceed rapidly, causing a non-uniform reaction. On the other hand, when the heating temperature falls below 200°C, the reaction does not sufficiently proceed, and Na tends to remain in excess. The heat treatment time is set to, for example, greater than or equal to 3 hours and less than or equal to 10 hours after the temperature is increased at a temperature rising rate of greater than or equal to 3.0°C/min and less than or equal to 8.0°C/min to reach the desired heat treatment temperature. Cooling is performed after the heat treatment. Note that a cooling method is not particularly limited, and is, for example, natural cooling (in-furnace cooling).

After cooling, the resulting product is thoroughly washed with water, ethanol, methanol, or the like, and dried to obtain a Li-Na composite oxide. The drying after washing is carried out in an atmosphere or vacuum, and is not particularly limited. After washing, heat treatment or washing treatment may be carried out again.

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core due to charge. When the negative electrode 12 has a negative electrode mixture layer, the negative electrode mixture layer is preferably formed on both surfaces of the negative electrode core. For the negative electrode core, a foil of a metal stable within a potential range of the negative electrode 12, such as copper and a copper alloy, a film in which such a metal is disposed on a surface thereof, and the like may be used. The thickness of the negative electrode core is, for example, greater than or equal to 5 μm and less than or equal to 30 μm. The negative electrode mixture layer includes a negative electrode active material and a binder, for example. The thickness of the negative electrode mixture layer is greater than or equal to 10 μm and less than or equal to 150 μm on one side of the negative electrode core, for example. The negative electrode 12 may be produced by, for example, applying a negative electrode mixture slurry including the negative electrode active material, the binder, and the like on the surface of the negative electrode core, and drying and subsequently rolling the coating film to form the negative electrode mixture layer on both the surfaces of the negative electrode core.

The negative electrode active material contained in the negative electrode mixture layer is not particularly limited as long as the material can reversibly occlude and release lithium ions, and a carbon material such as graphite is generally used. The graphite may be either natural graphite, such as flake graphite, massive graphite, and amorphous graphite, or artificial graphite, such as massive artificial graphite and graphitized mesophase-carbon microbead. For the negative electrode active material, a metal that forms an alloy with Li, such as Si and Sn, a metal compound including Si or Sn, a lithium-titanium composite oxide, and the like may be used. In addition, carbon-coated variants of these materials may be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0 < y < 2$), or the like may be used in combination with graphite.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (such as PAA-Na, PAA-K, or a partially neutralized salt), and polyvinyl alcohol (PVA). These binders may be used singly or in combination with greater than or equal to two thereof.

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

[Non-Aqueous Electrolyte]

The non-aqueous electrolyte has ion conductivity (for example, lithium-ion conductivity). The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles such as acetonitrile, amides such as dimethylformamide, and a mixed solvent of greater than or equal to two thereof, and the like are used, for example. The non-aqueous solvent may contain a halogen-substituted product in which hydrogen of these solvents is at least partially replaced with a halogen atom such as fluorine. Examples of the halogen-substituted product include fluorinated cyclic carbonate esters such as fluoroethylene carbonate (FEC), fluorinated linear carbonate esters, and fluorinated linear carboxylic acid esters such as methyl fluoropropionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane ethylthyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium, LiCl, LiBr, LiI, a phosphate salt, a borate salt, and an imide salt. Examples of the phosphate salt include lithium difluorophosphate ($LiPO_2F_2$), lithium difluorobis(oxalato)phosphate (LiDFBOP), and lithium tetrafluoro(oxalato)phosphate. Examples of the borate salt include lithium bis(oxalato)borate (LiBOB) and lithium difluoro(oxalato)borate (LiDFOB). For the imide salt, lithium bisfluorosulfonylimide ($LiN(FSO_2)_2$), lithium bistrifluoromethanesulfonylimide ($LiN(CF_3SO_2)_2$), lithium trifluoromethanesulfonyl nonafluorobutanesulfonylimide ($LiN(CF_3SO_2)(C_4F_9SO_2)$), lithium bispentafluoroethanesulfonylimide ($LiN(C_2F_5SO_2)_2$), or the like is used. Among these, $LiPF_6$ is preferably used from the viewpoint of ion conductivity and electrochemical stability. The concentration of the lithium salt may be, for example, less than or equal to 4 mol per liter of non-aqueous solvent, may be less than or equal to 3 mol, and is preferably less than or equal to 1.8 mol, and more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

EXAMPLES

Hereinafter, the present disclosure will be further described with Examples, but the present disclosure is not limited to these Examples.

<Example 1>

[Production of Positive Electrode Active Material]

A hydroxide containing Ni and Mn at a mole ratio of 1:1 and sodium carbonate were mixed at a mole ratio of Ni:Mn:Na = 0.5:0.5:1.05, and the obtained mixture was heated at a temperature rising rate of 1°C/min, calcined in air at 800°C for 24 hours, and then rapidly cooled in air to obtain a Na composite oxide. Next, a lithium molten salt consisting of lithium hydroxide only and a Na composite oxide were mixed at a mole ratio of Li:Na = 5:1, and the obtained mixture was heated at a temperature rising rate of 5°C/min and heated in air at 280°C for 5 hours. Thereafter, the product was cooled at a temperature falling rate of 2°C/min and washed with a sufficient amount of water. The solution was then subjected to suction filtration to remove the filtrate, and the residue remaining on the filter paper was heat-treated in a vacuum at 160°C for 4 hours to obtain a Li-Na composite oxide. The composition of the obtained Li-Na composite oxide was analyzed using an ICP optical emission spectrometer (CIROS-120, manufactured by SPECTRO) and an oxygen-nitrogen analyzer (EMGA-920, manufactured by HORIBA, Ltd.), and the results confirmed that the Li-Na composite oxide is represented by the compositional formula $Li_{0.851}Na_{0.123}Ni_{0.505}Mn_{0.495}O_{1.804}$.

[Production of Positive Electrode]

For the positive electrode active material, the Li-Na composite oxide was used. The positive electrode active material, acetylene black, and polyvinylidene fluoride were mixed at a solid mass ratio of 92:5:3, and N-methyl-2-pyrrolidone (NMP) was used as a dispersion medium to prepare a positive electrode mixture slurry. The positive electrode slurry was applied to a positive electrode core composed of an aluminum foil, and the coating film was dried and then rolled by a rolling roller to obtain a positive electrode in which a positive electrode mixture layer was formed on the positive electrode core.

[Preparation of Non-Aqueous Electrolyte]

Lithium hexafluorophosphate (LiPF$_6$) was dissolved in a mixed solvent of fluoroethylene carbonate (FEC) and methyl propionate (FMP) at a volume ratio of 1:3 so that the concentration was 1 mol/liter to prepare a non-aqueous electrolyte.

[Production of Test Cell]

For the negative electrode, a lithium metal foil was used. The positive electrode and the negative electrode were disposed to face each other with a separator interposed therebetween to form an electrode assembly. The electrode assembly and the non-aqueous electrolyte liquid were housed in a coin-shaped housing can, and an opening portion of the housing can was sealed with a gasket and a sealing assembly to prepare a test cell (non-aqueous electrolyte secondary battery).

[Evaluation of Charge-Discharge Capacity]

The test cells were charged at a constant current of 0.2 C until the battery voltage reached 4.5 V under a condition of 25°C, and then charged at a constant voltage of 4.5 V until the current value reached 0.02 C to determine charge capacities. The test cells were rested for 20 minutes and then discharged at a constant current of 0.2 C until the battery voltage reached 2.5 V to determine discharge capacities.

FIG. 2 illustrates the initial charge-discharge curve of the test cell of Example 1, and FIG. 3 illustrates the dQ/dV curve obtained during the initial charge-discharge of the test cell of Example 1. As illustrated in FIG. 2, the test cell produced in Example 1 exhibited a plateau region in the vicinity of 4.316 V where the voltage remains nearly constant. As illustrated in FIG. 3, in the test cell produced in Example 1, the dQ/dV curve exhibits a peak with a half-width of 0.026 V in a range of greater than or equal to 4.2 V and less than or equal to 4.4 V.

[Evaluation of Load Characteristics]

The test cell was charged at a constant current of 0.02 C under a condition of 25°C until the battery voltage reached 4.5 V. Thereafter, the battery was discharged at a constant current of 0.02 C until the battery voltage reached 2.5 V to measure discharge capacity at 0.02 C.

Next, the test cell was charged at a constant current of 0.2 C under a condition of 25°C until a battery voltage reached 4.5 V, and then charged at a constant voltage of 4.5 V until the current value reached 0.02 C. Thereafter, the battery was discharged at a constant current of 0.2 C until the battery voltage reached 2.5 V to measure discharge capacity at 0.2 C.

Next, the test cell was charged at a constant current of 1 C under a condition of 25°C until a battery voltage reached 4.5 V, and then charged at a constant voltage of 4.5 V until the current value reached 0.02 C. Thereafter, the battery was discharged at a constant current of 1 C until the battery voltage reached 2.5 V to measure discharge capacity at 1 C. Then, the first load characteristic and the second load characteristic were calculated according to the following equations.

First load characteristic (%) = (discharge capacity at 0.2 C/discharge capacity at 0.02 C) × 100 Second load characteristic (%) = (discharge capacity at 1 C/discharge capacity at 0.02 C) × 100

[Evaluation of Capacity Retention Rate]

The test cell was charged at a constant current of 1 C under a condition of 25°C until a battery voltage reached 4.5 V, and then charged at a constant voltage of 4.5 V until the current value reached 0.02 C. Thereafter, the test cell was discharged at a constant current of 1 C until the battery voltage reached 2.5 V. This charge-discharge operation was defined as one cycle, and charge-discharge measurements were repeated for 50 cycles. The capacity retention rate of the test cell was determined according to the following equation to evaluate the charge-discharge cycle characteristics.

Capacity retention rate (%) = (discharge capacity at 50th cycle/discharge capacity at 1st cycle) $\times$ 100

<Example 2>

A test cell was produced and evaluated in the same manner as in Example 1 except that the lithium molten salt was changed in the production of the positive electrode active material. More specifically, the lithium molten salt used in the production of the positive electrode active material was prepared by mixing lithium hydroxide, lithium nitrate, and lithium chloride at a mole ratio of 75:22:3. The compositional formula of the Li-Na composite oxide produced in Example 2 was $Li_{0.857}Na_{0.114}Ni_{0.505}Mn_{0.495}O_{1.926}$. The test cell produced in Example 2 exhibited a plateau region in the charge-discharge curve in the vicinity of 4.316 V. In the test cell produced in Example 2, a peak with a half-width of 0.028 V was observed in the dQ/dV curve in a range of greater than or equal to 4.2 V and less than or equal to 4.4 V.

<Example 3>

A test cell was produced and evaluated in the same manner as in Example 1 except that the lithium molten salt was changed in the production of the positive electrode active material. More specifically, the lithium molten salt used in the production of the positive electrode active material was prepared by mixing lithium hydroxide, lithium nitrate, and lithium chloride at a mole ratio of 50:44:6. The compositional formula of the Li-Na composite oxide produced in Example 3 was $Li_{0.875}Na_{0.100}Ni_{0.505}Mn_{0.495}O_{1.926}$. The test cell produced in Example 3 exhibited a plateau region in the charge-discharge curve in the vicinity of 4.320 V. In the test cell produced in Example 3, a peak with a half-width of 0.025 V was observed in the dQ/dV curve in a range of greater than or equal to 4.2 V and less than or equal to 4.4 V.

<Example 4>

A test cell was produced and evaluated in the same manner as in Example 1 except that the lithium molten salt was changed in the production of the positive electrode active material. More specifically, the lithium molten salt used in the production of the positive electrode active material was prepared by mixing lithium hydroxide, lithium nitrate, and lithium chloride at a mole ratio of 25:66:9. The compositional formula of the Li-Na composite oxide produced in Example 4 was $Li_{0.882}Na_{0.0831}Ni_{0.506}Mn_{0.494}O_{1.837}$. The test cell produced in Example 4 exhibited a plateau region in the charge-discharge curve in the vicinity of 4.326 V. In the test cell produced in Example 4, a peak with a half-width of 0.027 V was observed in the dQ/dV curve in a range of greater than or equal to 4.2 V and less than or equal to 4.4 V.

<Example 5>

A test cell was produced and evaluated in the same manner as in Example 1 except that the heating temperature of the lithium molten salt and the Na composite oxide was changed from 280°C to 350°C in the production of the positive electrode active material. The compositional formula of the Li-Na composite oxide produced in Example 5 was $Li_{0.901}Na_{0.0890}Ni_{0.506}Mn_{0.494}O_{1.930}$. The test cell produced in Example 5 exhibited a plateau region in the charge-discharge curve in the vicinity of 4.321 V. In the test cell produced in Example 5, a peak with a half-width of 0.028 V was observed in the dQ/dV curve in a range of greater than or equal to 4.2 V and less than or equal to 4.4 V.

<Example 6>

A test cell was produced and evaluated in the same manner as in Example 2 except that the heating temperature of the lithium molten salt and the Na composite oxide was changed from 280°C to 350°C in the production of the positive electrode active material. The compositional formula of the Li-Na composite oxide produced in Example 6 was $Li_{0.897}Na_{0.0861}Ni_{0.505}Mn_{0.495}O_{1.859}$. The test cell produced in Example 6 exhibited a plateau region in the charge-discharge curve in the vicinity of 4.321 V. In the test cell produced in Example 6, a peak with a half-width of 0.029 V was observed in the dQ/dV curve in a range of greater than or equal to 4.2 V and less than or equal to 4.4 V.

<Example 7>

A test cell was produced and evaluated in the same manner as in Example 3 except that, in the production of the positive electrode active material, the heating temperature of the lithium molten salt and the Na composite oxide was changed from 280°C to 350°C. The compositional formula of the Li-Na composite oxide produced in Example 7 was $Li_{0.914}Na_{0.0735}Ni_{0.504}Mn_{0.496}O_{1.929}$. The test cell produced in Example 7 exhibited a plateau region in the charge-discharge curve in the vicinity of 4.326 V. In the test cell produced in Example 7, a peak with a half-width of 0.035 V was observed in the dQ/dV curve in a range of greater than or equal to 4.2 V and less than or equal to 4.4 V.

<Example 8>

A test cell was produced and evaluated in the same manner as in Example 4 except that, in the production of the positive electrode active material, the heating temperature of the lithium molten salt and the Na composite oxide was changed from 280°C to 350°C. The compositional formula of the Li-Na composite oxide produced in Example 8 was $Li_{0.915}Na_{0.0652}Ni_{0.506}Mn_{0.494}O_{1.861}$. The test cell produced in Example 8 exhibited a plateau region in the charge-discharge curve in the vicinity of 4.331 V. In the test cell produced in Example 8, a peak with a half-width of 0.041 V was observed in the dQ/dV curve in a range of greater than or equal to 4.2 V and less than or equal to 4.4 V.

<Comparative Example 1>

A test cell was produced and evaluated in the same manner as in Example 1 except that, in the production of the positive electrode active material, a lithium molten salt was prepared by mixing lithium nitrate and lithium chloride at a mole ratio of 88:12, and the lithium molten salt was mixed with a Na composite oxide at a mole ratio of Li:Na = 5:1. The compositional formula of the Li-Na composite oxide produced in Comparative Example 1 was $Li_{0.938}Na_{0.0229}Ni_{0.505}Mn_{0.495}O_{1.935}$. FIG. 2 illustrates the initial charge-discharge curve of the test cell of Comparative Example 1, and FIG. 3 illustrates the dQ/dV curve obtained during the initial charge-discharge of the test cell of Comparative Example 1. As illustrated in FIG. 2, a plateau region, where the voltage remains nearly constant, appeared in the vicinity of 4.376 V. On the other hand, the length of the plateau region was shorter than the length of the plateau region in Example 1. As illustrated in FIG. 3, the dQ/dV curve in the test cell produced in Comparative Example 1 exhibits a peak with a half-width of 0.115 V in a range of greater than or equal to 4.2 V and less than or equal to 4.4 V.

<Comparative Example 2>

In the production of the positive electrode active material, a hydroxide containing Ni and Mn at a mole ratio of 1:1 and lithium hydroxide were mixed at a mole ratio of Ni: Mn: Li = 0.5:0.5:1.07, and the obtained mixture was heated at a temperature rising rate of 5°C/min, calcined in air at 900°C for 10 hours, and then cooled at a temperature falling rate of 10°C/min to obtain a composite oxide represented by the compositional formula $Li_{1.00}Ni_{0.500}Mn_{0.500}O_{2.000}$. A test cell was produced and evaluated in the same manner as in Example 1 except that this composite oxide was used for the positive electrode active material. FIG. 2 illustrates the initial charge-discharge curve of the test cell of Comparative Example 2, and FIG. 3 illustrates the dQ/dV curve obtained during the initial charge-discharge of the test cell of Comparative Example 2. As illustrated in FIG. 2, the initial charge-discharge curve of the test cell of Comparative Example 2 did not exhibit a plateau region. As illustrated in FIG. 3, the dQ/dV curve of the test cell produced in Comparative Example 2 did not exhibit a peak in the range of greater than or equal to 4.2 V and less than or equal to 4.4 V.

Table 1 shows the charge capacity, discharge capacity, first load characteristic, second load characteristic, and capacity retention rate of the test cells in Examples 1 to 8 and Comparative Examples 1 and 2. Table 1 also shows the composition of the composite oxide, the type of lithium molten salt, the potential at which a plateau region appears (plateau potential), the presence or absence of a peak in the range of greater than or equal to 4.2 V and less than or equal to 4.4 V, and the half-width of the peak.

[Table 1]

| | Positive electrode active material | | | | | Evaluation result | | | | | | | |
| | Composition [mol%] | | | Type of Li molten salt (proportion of LiOH in Li molten salt) | Heating temperature [°C] | Plateau potential [V] | Presence /absence of peak | Half-width [V] | Charge capacity [mAh/g] | Discharge capacity [mAh/g] | First load characteristic [%] | Second load characteristic [%] | Capacity retention rate [%] |
| | Na | Ni | Mn | | | | | | | | | | |
|---|---|---|---|---|---|---|---|---|---|---|---|---|---|
| Example 1 | 12.3 | 50.5 | 49.5 | LiOH (100%) | 280 | 4.316 | Present | 0.026 | 241.5 | 223.6 | 99.79 | 93.54 | 83.35 |
| Example 2 | 11.4 | 50.5 | 49.5 | LiOH+LiNO$_3$+LiCl (75%) | 280 | 4.316 | Present | 0.028 | 238.9 | 221.9 | 100.25 | 94.10 | 84.31 |
| Example 3 | 10.0 | 50.5 | 49.5 | LiOH+LiNO$_3$+LiCl (50%) | 280 | 4.320 | Present | 0.025 | 241.9 | 224.0 | 99.27 | 94.16 | 85.75 |
| Example 4 | 8.31 | 50.6 | 49.4 | LiOH+LiNO$_3$+LiCl (25%) | 280 | 4.326 | Present | 0.027 | 238.1 | 222.5 | 99.88 | 94.25 | 87.16 |
| Example 5 | 8.90 | 50.6 | 49.4 | LiOH (100%) | 350 | 4.321 | Present | 0.028 | 243.6 | 220.5 | 100.81 | 95.17 | 82.65 |
| Example 6 | 8.61 | 50.5 | 49.5 | LiOH+LiNO$_3$+LiCl (75%) | 350 | 4.321 | Present | 0.029 | 240.9 | 222.7 | 100.33 | 95.08 | 85.13 |
| Example 7 | 7.35 | 50.4 | 49.6 | LiOH+LiNO$_3$+LiCl (50% | 350 | 4.326 | Present | 0.035 | 241.4 | 222.5 | 100.26 | 94.39 | 86.98 |
| Example 8 | 6.52 | 50.6 | 49.4 | LiOH+LiNO$_3$+LiCl (25%) | 350 | 4.331 | Present | 0.041 | 240.3 | 224.0 | 100.77 | 94.80 | 87.06 |
| Comparative Example 1 | 2.29 | 50.5 | 49.5 | LiNO$_3$+LiCl (0%) | 280 | 4.376 | Present | 0.115 | 229.7 | 221.1 | 98.62 | 92.38 | 81.73 |
| Comparative Example 2 | 0 | 50.0 | 50.0 | - | - | - | None | - | 214.5 | 174.6 | 91.0 | 81.96 | 81.35 |

EP 4 756 919 A1

As shown in Table 1, the test cells of Examples 1 to 8 all had increased capacity together with improved capacity retention rate and load characteristics as compared with the test cells of Comparative Examples 1 and 2. That is, an increase in battery capacity can be achieved together with improved charge-discharge cycle characteristics and load characteristics by using a positive electrode active material containing a predetermined amount of Na while controlling the half-width of the peak within the range of greater than or equal to 4.2 V and less than or equal to 4.4 V to less than or equal to 0.11 V. Although the test cell of Comparative Example 1 achieves increased capacity as compared with the test cell of Comparative Example 2, the load characteristics and capacity retention rate are deteriorated as compared with those of the test cells of Examples. Accordingly, even when the dQ/dV curve exhibits a peak in the voltage range of greater than or equal to 4.2 V and less than or equal to 4.4 V, it can be said that the charge-discharge cycle characteristics and load characteristics cannot be improved if the half-width of the peak exceeds 0.11 V.

<Example 9>

A test cell was produced and evaluated in the same manner as in Example 1 except that, in the production of the positive electrode active material, the hydroxide containing Ni and Mn and the mixing ratio of Ni, Mn, and Na were changed. More specifically, a hydroxide containing Ni and Mn at a mole ratio of 54:46 was used, and a material prepared by mixing Ni, Mn, and Na at a mole ratio of 0.54:0.46:1.05 was used. The compositional formula of the Li-Na composite oxide produced in Example 9 was $Li_{0.883}Na_{0.108}Ni_{0.544}Mn_{0.456}O_2$. The test cell produced in Example 9 exhibited a plateau region in the charge-discharge curve in the vicinity of 4.276 V. In the test cell produced in Example 9, a peak with a half-width of 0.07 V was observed in the dQ/dV curve in a range of greater than or equal to 4.2 V and less than or equal to 4.4 V.

<Example 10>

A test cell was produced and evaluated in the same manner as in Example 1 except that, in the production of the positive electrode active material, the hydroxide containing Ni and Mn, the mixing ratio of Ni, Mn, and Na, calcination temperature, calcination time, and calcination atmosphere were changed. More specifically, a hydroxide containing Ni and Mn at a mole ratio of 60:40 was used, and a material was prepared by mixing Ni, Mn, and Na at a mole ratio of 0.60:0.40:1.05, the calcination temperature was set to 600°C, the calcination time was set to 20 hours, and the calcination atmosphere was at an oxygen flow rate of 4 L/min. The compositional formula of the Li-Na composite oxide produced in Example 10 was $Li_{0.897}Na_{0.0944}Ni_{0.596}Mn_{0.404}O_2$. The test cell produced in Example 10 exhibited a plateau region in the charge-discharge curve in the vicinity of 4.275 V. In the test cell produced in Example 10, a peak with a half-width of 0.07 V was observed in the dQ/dV curve in a range of greater than or equal to 4.2 V and less than or equal to 4.4 V.

<Example 11>

A test cell was produced and evaluated in the same manner as in Example 1 except that, in the production of the positive electrode active material, the hydroxide containing Ni and Mn, the mixing ratio of Ni, Mn, and Na, calcination temperature, calcination time, and calcination atmosphere were changed. More specifically, a hydroxide containing Ni and Mn at a mole ratio of 70:30 was used, and a material was prepared by mixing Ni, Mn, and Na at a mole ratio of 0.70:0.30:1.05, the calcination temperature was set to 600°C, the calcination time was set to 20 hours, and the calcination atmosphere was at an oxygen flow rate of 4 L/min. The compositional formula of the Li-Na composite oxide produced in Example 11 was $Li_{0.919}Na_{0.0714}Ni_{0.703}Mn_{0.297}O_2$. The test cell produced in Example 11 exhibited a plateau region in the charge-discharge curve in the vicinity of 4.236 V. In the test cell produced in Example 11, a peak with a half-width of 0.09 V was observed in the dQ/dV curve in a range of greater than or equal to 4.2 V and less than or equal to 4.4 V.

<Comparative Example 3>

A test cell was produced and evaluated in the same manner as in Comparative Example 2 except that, in the production of the positive electrode active material, the hydroxide containing Ni and Mn and the mixing ratio of Ni, Mn, and Li were changed. More specifically, a hydroxide containing Ni and Mn at a mole ratio of 54:46 was used, and a material prepared by mixing Ni, Mn, and Li at a mole ratio of 0.54:0.46:1.05 was used. The compositional formula of the composite oxide produced was $Li_{1.0}Ni_{0.544}Mn_{0.456}O_2$. The test cell produced in Comparative Example 3 did not exhibit a plateau region in the charge-discharge curve. In the test cell produced in Comparative Example 3, a peak of the dQ/dV curve was not observed in a range of greater than or equal to 4.2 V and less than or equal to 4.4 V.

<Comparative Example 4>

A test cell was produced and evaluated in the same manner as in Comparative Example 2 except that, in the production of the positive electrode active material, the hydroxide containing Ni and Mn, the mixing ratio of Ni, Mn, and Li, and calcinating atmosphere were changed. More specifically, a hydroxide containing Ni and Mn at a mole ratio of 60:40 was used, and a material prepared by mixing Ni, Mn, and Li at a mole ratio of 0.60:0.40:1.05 under a calcination atmosphere at an oxygen flow rate of 4 L/min was used. The compositional formula of the composite oxide produced was $Li_{1.0}Ni_{0.596}Mn_{0.404}O_2$. The test cell produced in Comparative Example 4 did not exhibit a plateau region in the charge-discharge curve. In the test cell produced in Comparative Example 4, a peak of the dQ/dV curve was not observed in a range of greater than or equal to 4.2 V and less than or equal to 4.4 V.

<Comparative Example 5>

A test cell was produced and evaluated in the same manner as in Comparative Example 2 except that, in the production of the positive electrode active material, the hydroxide containing Ni and Mn, the mixing ratio of Ni, Mn, and Li, and calcination atmosphere were changed. More specifically, a hydroxide containing Ni and Mn at a mole ratio of 70:30 was used, and a material prepared by mixing Ni, Mn, and Li at a mole ratio of 0.70:0.30:1.05 under a calcination atmosphere at an oxygen flow rate of 4 L/min was used. The compositional formula of the composite oxide produced was $Li_{1.0}Ni_{0.703}Mn_{0.297}O_2$. The test cell produced in Comparative Example 5 did not exhibit a plateau region in the charge-discharge curve. In the test cell produced in Comparative Example 5, a peak of the dQ/dV curve was not observed in a range of greater than or equal to 4.2 V and less than or equal to 4.4 V.

Tables 2 to 4 show the charge capacity and discharge capacity of the test cells in Examples 9 to 12 and Comparative Examples 3 to 5. Tables 2 to 4 also show the composition of the composite oxide, the type of lithium molten salt, the potential at which a plateau region appears (plateau potential), the presence or absence of a peak in the range of greater than or equal to 4.2 V and less than or equal to 4.4 V, and the half-width of the peak.

[Table 2]

| | Positive electrode active material | | | | | Evaluation result | | | | |
|---|---|---|---|---|---|---|---|---|---|---|
| | Composition [mol%] | | | Type of Li molten salt | Heating Temperature [°C] | Plateau Potential [V] | Presence /absence of peak | Half-width [V] | Charge capacity [mAh/g] | Discharge capacity [mAh/g] |
| | Na | Ni | Mn | | | | | | | |
| Example 9 | 10.8 | 54.4 | 45.6 | LiOH | 280 | 4.276 | Present | 0.070 | 239.2 | 221.3 |
| Comparative Example 3 | 0 | 54.4 | 45.6 | - | - | - | None | - | 243.3 | 195.3 |

[Table 3]

| | Positive electrode active material | | | | | Evaluation result | | | | |
|---|---|---|---|---|---|---|---|---|---|---|
| | Composition [mol%] | | | Type of Li molten salt | Heating Temperature [°C] | Plateau Potential [V] | Presence /absence of peak | Half-width [V] | Charge capacity [mAh/g] | Discharge capacity [mAh/g] |
| | Na | Ni | Mn | | | | | | | |
| Example 10 | 9.44 | 59.6 | 40.4 | LiOH | 280 | 4.275 | Present | 0.070 | 256.8 | 226.3 |
| Comparative Example 4 | 0 | 59.6 | 40.4 | - | - | - | None | - | 250.0 | 205.8 |

[Table 4]

| | Positive electrode active material | | | | | Evaluation result | | | | |
|---|---|---|---|---|---|---|---|---|---|---|
| | Composition [mol%] | | | Type of Li molten salt | Heating Temperature [°C] | Plateau Potential [V] | Presence /absence of peak | Half-width [V] | Charge capacity [mAh/g] | Discharge capacity [mAh/g] |
| | Na | Ni | Mn | | | | | | | |
| Example 11 | 7.14 | 70.3 | 29.7 | LiOH | 280 | 4.236 | Present | 0.080 | 259.6 | 234.8 |

(continued)

| | Positive electrode active material | | | | | Evaluation result | | | | |
|---|---|---|---|---|---|---|---|---|---|---|
| | Composition [mol%] | | | Type of Li molten salt | Heating Temperature [°C] | Plateau Potential [V] | Presence /absence of peak | Half-width [V] | Charge capacity [mAh/g] | Discharge capacity [mAh/g] |
| | Na | Ni | Mn | | | | | | | |
| Comparative Example 5 | 0 | 70.3 | 29.7 | - | - | - | None | - | 234.3 | 200.8 |

As shown in Tables 2 to 4, the test cells of Examples 9 to 12 all had increased capacity as compared with the test cells of Comparative Examples 3 to 5. That is, even when the content of Ni in the composite oxide is increased, an increase in battery capacity can be achieved by using a positive electrode active material containing a predetermined amount of Na while controlling the half-width of the peak within the range of greater than or equal to 4.2 V and less than or equal to 4.4 V to less than or equal to 0.11 V. That is, even when the content of Ni in the composite oxide is increased, the effect of the present disclosure can still be exhibited.

The present disclosure will be further described with reference to embodiments below.

Constitution 1: A positive electrode active material for use in a non-aqueous electrolyte secondary battery, wherein the positive electrode active material has a crystal structure belonging to a space group R-3m, and is represented by a compositional formula $Li_xNa_yNi_{1-a-b}Mn_aX_bO_c$, wherein X represents at least one selected from the group consisting of transition metal elements and main-group elements other than Li, Na, Ni, and Mn; $0.80 \leq x \leq 1.15$, $0 < y \leq 0.20$, $0.80 < x+y \leq 1.20$ are satisfied; and c is a value satisfying electroneutrality, and a dQ/dV curve obtained upon initial charge of the non-aqueous electrolyte secondary battery exhibits a peak in a voltage range of greater than or equal to 4.2 V and less than or equal to 4.4 V with a half-width of the peak being less than or equal to 0.11 V.

Constitution 2: The positive electrode active material according to Constitution 1, wherein a half-width of the peak is less than or equal to 0.08 V.

Constitution 3: The positive electrode active material according to Constitution 1 or 2, wherein in the compositional formula $Li_xNa_yNi_{1-a-b}Mn_aX_bO_c$, a mole ratio (y) of Na satisfies $0.02 \leq y \leq 0.15$.

Constitution 4: The positive electrode active material according to any one of Constitutions 1 to 3, wherein in the compositional formula $Li_xNa_yNi_{1-a-b}Mn_aX_bO_c$, a mole ratio (y) of Na satisfies $0.06 \leq y \leq 0.13$.

Constitution 5: The positive electrode active material according to any one of Constitutions 1 to 4, wherein in the compositional formula $Li_xNa_yNi_{1-a-b}Mn_aX_bO_c$, a mole ratio (1-a-b) of Ni satisfies $0.3 \leq 1-a-b \leq 0.7$.

Constitution 6: The positive electrode active material according to any one of Constitutions 1 to 5, wherein in the compositional formula $Li_xNa_yNi_{1-a-b}Mn_aX_bO_c$, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

Constitution 7: The positive electrode active material according to any one of Constitutions 1 to 6, wherein in the compositional formula $Li_xNa_yNi_{1-a-b}Mn_aX_bO_c$, X represents at least one selected from the group consisting of Al and Co.

Constitution 8: A method for producing a positive electrode active material for use in a non-aqueous electrolyte secondary battery, the method including the steps of: synthesizing a Na composite oxide represented by a compositional formula $Na_eNi_{1-f-g}Mn_fX_gO_h$, wherein X represents at least one element selected from the group consisting of metal elements other than Li, Na, Ni, and Mn, $e \leq 1.15$, $0 < 1-f-g \leq 1$, $0 \leq f < 1$, and $0 \leq g < 1$ are satisfied, and h is a value satisfying electroneutrality; and reacting the Na composite oxide with a lithium compound to replace a part of Na in the Na composite oxide with Li, wherein the lithium compound includes at least one selected from the group consisting of lithium hydroxide, lithium carbonate, and lithium hydrogen carbonate.

Constitution 9: A positive electrode including the positive electrode active material according to any one of Constitutions 1 to 7.

Constitution 10: A non-aqueous electrolyte secondary battery, comprising: the positive electrode according to Constitution 9; a negative electrode; and a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket.

**Claims**

1. A positive electrode active material for use in a non-aqueous electrolyte secondary battery, wherein

   the positive electrode active material has a crystal structure belonging to a space group R-3m, and is represented by a compositional formula:

   $$Li_xNa_yNi_{1-a-b}Mn_aX_bO_c,$$

   wherein X represents at least one selected from the group consisting of transition metal elements and main-group elements other than Li, Na, Ni, and Mn; $0.80 \leq x \leq 1.15$, $0 < y \leq 0.20$, $0.80 < x+y \leq 1.20$, $0 < 1-a-b \leq 1$, $0 \leq a < 1$, and $0 \leq b < 1$ are satisfied; and c is a value satisfying electroneutrality, and
   a dQ/dV curve obtained upon initial charge of the non-aqueous electrolyte secondary battery exhibits a peak in a voltage range of greater than or equal to 4.2 V and less than or equal to 4.4 V with a half-width of the peak being less than or equal to 0.11 V.

2. The positive electrode active material according to claim 1, wherein a half-width of the peak is less than or equal to 0.08 V.

3. The positive electrode active material according to claim 1, wherein in the compositional formula $Li_xNa_yNi_{1-a-b}Mn_aX_bO_c$, a mole ratio (y) of Na satisfies $0.02 \leq y \leq 0.15$.

4. The positive electrode active material according to claim 1, wherein in the compositional formula $Li_xNa_yNi_{1-a-b}Mn_aX_bO_c$, a mole ratio (y) of Na satisfies $0.06 \leq y \leq 0.13$.

5. The positive electrode active material according to claim 1, wherein in the compositional formula $Li_xNa_yNi_{1-a-b}Mn_aX_bO_c$, a mole ratio (1-b-c) of Ni satisfies $0.3 \leq 1-b-c \leq 0.7$.

6. The positive electrode active material according to claim 1, wherein in the compositional formula $Li_xNa_yNi_{1-a-b}Mn_aX_bO_c$, X represents at least one selected from the group consisting of Mg, Ca, Sr, Ba, Sn, Ti, Si, V, Cr, Fe, Cu, Zn, Bi, Sb, B, Ga, In, P, Zr, Hf, Nb, Ta, Mo, W, Co, and Al.

7. The positive electrode active material according to claim 1, wherein in the compositional formula $Li_xNa_yNi_{1-a-b}Mn_aX_bO_c$, X represents at least one selected from the group consisting of Al and Co.

8. A method for producing a positive electrode active material for use in a non-aqueous electrolyte secondary battery, the method including the steps of:

   synthesizing a Na composite oxide represented by a compositional formula $Na_eNi_{1-f-g}Mn_fX_gO_h$, wherein X represents at least one element selected from the group consisting of metal elements other than Li, Na, Ni, and Mn, $e \leq 1.15$, $0 < 1-f-g \leq 1$, $0 \leq f < 1$, and $0 \leq g < 1$ are satisfied, and h is a value satisfying electroneutrality; and reacting the Na composite oxide with a lithium compound to replace a part of Na in the Na composite oxide with Li, wherein the lithium compound includes at least one selected from the group consisting of lithium hydroxide, lithium carbonate, and lithium hydrogen carbonate.

9. A positive electrode including the positive electrode active material according to any one of claims 1 to 7.

10. A non-aqueous electrolyte secondary battery, comprising: a positive electrode according to claim 9; a negative electrode; and a non-aqueous electrolyte.

# Figure 1

Figure 2

Figure 3

## INTERNATIONAL SEARCH REPORT

| International application No. |
| --- |
| **PCT/JP2024/022715** |

**A.  CLASSIFICATION OF SUBJECT MATTER**

*H01M 4/525*(2010.01)i; *C01G 53/00*(2006.01)i; *H01M 4/505*(2010.01)i
FI:   H01M4/525; C01G53/00 A; H01M4/505

According to International Patent Classification (IPC) or to both national classification and IPC

**B.  FIELDS SEARCHED**

Minimum documentation searched (classification system followed by classification symbols)

H01M4/525; C01G53/00; H01M4/505

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2017-174558 A (HONDA MOTOR CO., LTD.) 28 September 2017 (2017-09-28) paragraphs [0059]-[0061], example 1, table 1, fig. 10-11, 13 | 1-2, 5-10 |
| X | JP 2004-323331 A (TOSOH CORP.) 18 November 2004 (2004-11-18) claims 1-5, example 1 | 1-10 |
| A | JP 2016-102043 A (HONDA MOTOR CO., LTD.) 02 June 2016 (2016-06-02) entire text, all drawings | 1-10 |
| A | JP 2016-064967 A (HONDA MOTOR CO., LTD.) 28 April 2016 (2016-04-28) entire text, all drawings | 1-10 |
| A | KR 10-2003-0047456 A (HANYANG HAK WON CO., LTD.) 18 June 2003 (2003-06-18) entire text, all drawings | 1-10 |

☐ Further documents are listed in the continuation of Box C.      ☑ See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **19 August 2024** | **10 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/022715** |

| Patent document<br>cited in search report | | | Publication date<br>(day/month/year) | Patent family member(s) | Publication date<br>(day/month/year) |
|---|---|---|---|---|---|
| JP | 2017-174558 | A | 28 September 2017 | (Family: none) | |
| JP | 2004-323331 | A | 18 November 2004 | (Family: none) | |
| JP | 2016-102043 | A | 02 June 2016 | WO 2016/080471 A1<br>entire text, all drawings | |
| JP | 2016-064967 | A | 28 April 2016 | (Family: none) | |
| KR | 10-2003-0047456 | A | 18 June 2003 | (Family: none) | |

Form PCT/ISA/210 (patent family annex) (July 2022)

**REFERENCES CITED IN THE DESCRIPTION**

**Patent documents cited in the description**

- JP 2018107118 A
- JP 6410737 B
- JP 5750814 B

- JP 2014029829 A
- JP 2013020715 A
- JP 2007042295 A